# EUROPEAN PATENT APPLICATION

(11) **EP 1 715 433 A1**
(43) Date of publication of application: **25.10.2006**
(21) Application number: 05709959.0
(22) Date of filing: 09.02.2005
(51) Int. Cl.: G06F 17/30

(54) **CHARACTER DISPLAY METHOD**

(30) Priority: 13.02.2004 JP 2004035901
(71) Applicant: HITACHI, LTD., Chiyoda-ku Tokyo 100-8280 (JP)
(72) Inventor: KINA, Sadayuki Information & Telec. Systems, Tokyo 1400013 (JP); HANYU, Hiroshi Information & Telec. Systems, Tokyo 1400013 (JP); KITAJIMA, Shigeki Information & Telec. Systems, Tokyo 1400013 (JP)
(74) Representative: Strehl Schübel-Hopf & Partner
(86) International application number: PCT/JP2005/001907
(87) International publication number: WO 2005/078604

(57) **Abstract**

Conventionally, when a document is displayed on a mobile telephone whose screen size is limited, all the information cannot be displayed at a time. This drawback has resulted in a problem that grasping the content requires the button operation and screen switching. A Chinese-character Index is automatically created from the document, then being displayed. First, in the character-string extraction process 102, in the document inputted in the input process 101, the character string is divided and selected according to the character type, thereby creating a compact sentence. Next, in the character-string analysis process 104, priority order is allocated from the compact sentence. Moreover, in the Chinese-character Index creation process 106, necessary m × n characters are extracted from the character-string analysis result in accordance with the priority order. Then, these characters are two-dimensionally located in an m-row × n-column arrangement, thereby creating the Chinese-character Index. The Chinese-character Index created is outputted to the output process 107.

## Description

The present application relates to and claims priority from Japanese Patent Application No. 2004-035901, filed on February 13, 2004, the entire disclosure of which is incorporated herein by reference.

### BACKGROUND OF THE INVENTION

### TECHNICAL FIELD

The present invention relates to technologies for performing display of characters in information processing devices (in particular, in mobile terminals including mobile telephones). More particularly, it relates to, of display of the characters, display of characters which are included in a document and which indicate the feature of this document. The characters which indicate the feature of a document include ideographic characters such as the Chinese characters and part of the Hangul characters, and characters indicating consonants of the English Alphabet such as b and c.

### BACKGROUND ART

In recent years, in the mobile terminals including mobile telephones or the like, utilizing the data transfer technology has made it increasingly possible to implement transmission/reception of electronic mails and browsing of WEB sites between the mobile terminals including mobile telephones or the like. On account of this trend, the devices are common which are capable of implementing, as character types, not only the English-Alphabet input but also the Japanese-language input including the Chinese characters. In this way, the high-level functions are now becoming more and more required in the character input and character display. Simultaneously, however, request for the small-size and light-weight implement-tation of the devices is also being enhanced. On account of this overall situation, it has become an important key to satisfying the requests how the Chinese-character Index display of a document should be implemented with a high efficiency so as to grasp the content of the document.

The conventional creation method for creating the Chinese-character Index of a document is as follows: Namely, as one of retrieval methodologies, the proposal has been made concerning a methodology of creating a compact sentence by character-type division, overlap elimination, and hiragana elimination as is disclosed in Patent Document 1, i.e., "JP-A-2001-344282". The use of this methodology allows implementation of Chinese-character extraction from the document.

Also, as described in Non-Patent Document 1, i.e., "Psychological Measurement on Sense-of-Sight Leading Field using PC-Effects of Filling-in and Line Width", Sinngaku Technical Report, PRMU2002-106, NC2002-59 (2002/10/17), there has also been the following report: Namely, a geometrical figure whose inside is filled in exhibits a strong leading field for sense of sight. Accordingly, such a geometrical figure attracts line of sight. Namely, the Chinese characters possess an effect of being capable of leading sense of sight.

Also, in Non-Patent Document 2, i.e., "NHK Human Seminar, Questioning the Japanese Language Once Again" (2003/11/25), pp. 17 to 20, Kuyou Ishikawa, NHK Publishing Press, there has also been the following report: Namely, the Chinese characters are ideographic characters, and belong to a language of "hearing characters and speaking characters" with "written language" positioned in the center of the language. On the other hand, the English Alphabet is of phonetic characters, and belong to a language of "hearing voices and reading voices" with "spoken language" positioned in the center of the language. This difference lies in the basis of the differences in culture between Asia and Europe. Namely, the Chinese characters possess an effect that the characters themselves have meanings and that the meanings are conveyed by the characters.

Also, as is described as the premise in Non-Patent Document 3, i.e., "Investigation on Recognition Units of Chinese-Character and Kana-Character Mixed Words in the Japanese Language" (1999), Vol. 70, pp. 38 to 44, Chikako Fujita, Psychology Research, there has also been the following report: Namely, in a kana character, the recognition therefor is developed in the order of the configuration → phoneme → meaning. On the other hand, in a Chinese character, the recognition processes for the configuration, phoneme, and meaning are treated at the same time. Moreover, information on the visual feature of a single word as a whole is also utilized in the word recognition. Namely, the Chinese characters possess an effect of becoming an assistance to the word recognition.

Patent Document 1: JP-A-2001-344282

Non-Patent Document 1: Psychological Measurement on Sense-of-Sight Leading Field using PC
Non-Patent Document 2: NHK Human Seminar, Questioning the Japanese Language Once Again
Non-Patent Document 3: Investigation on Recognition Units of Chinese-Character and Kana-Character Mixed Words in the Japanese Language

### DISCLOSURE OF THE INVENTION

### PROBLEM TO BE SOLVED BY THE INVENTION

The problem is as follows: Namely, the visibility is no good when information such as accesses to the Internet, an address book, and a mail list are displayed in a limited screen size of a mobile terminal including a mobile telephone or the like.
Conventionally, some ideas, such as using graphical characters and displaying part of the sentences, have been devised. This is because, when displaying the above-described information in the limited screen size, there occurs necessity for frequently switching screens. Also, if the information amount has become enormous, it takes a significant time to grasp the content of the information. In view of this situation, an object of the present invention is to improve the above-described problem, and to facilitate the grasping of the content. This is concretely implemented by making compact the above-described information, such as the address book, the mail list, a mail text, and a document displayed at the browser terminal, through an automatic creation of the Chinese-character Index of the information.

In the present invention, of a document to be displayed, characters which indicate the feature of this document are displayed on an information processing device. In particular, in the present invention, character types which indicate the feature of the document are stored in advance into a storage device (in a language or the like configured with the same character type, the character type includes a character specified in advance). Then, of characters included in the document, a character belonging to the character types which indicate the feature and relating to the content of the document is extracted, then being displayed. This character type includes an ideographic character such as a Chinese character.

In a more concrete processing, the Chinese-character Index display of a document is performed in advance within a limited screen size of a mobile terminal including a mobile telephone or the like.
This processing allows utilization of the Index having high listability, high visibility, and high impressive-similarity, thereby permitting implementation of visual content estimation. As a result, it becomes possible to implement a time shortening in information grasping and an enhancement in accessibility.

The present invention includes two processes, i.e., a process of extracting a character string from a document, and a process of creating a display-intended Chinese-character Index. The character-string extraction process is a process based on the conventional methodologies such as the stroke number method and pixel number method. In the character-string extraction process, characters which become Chinese-character Index targets are automatically extracted from a document such as a mail text or WEB contents. Next, a compact sentence is created by performing character-type division, overlap elimination, and hiragana elimination. The character string extracted as the compact sentence is sorted in accordance with the usage frequency. Moreover, in an Index display character-string selection process, m × n characters which are arranged from the highest order in the sorted priority order are employed as the Chinese-character Index of this document. Furthermore, in the display-intended Chinese-character Index creation process, the character string acquired as a result of the Index display character-string selection is displayed by being visually arranged in the horizontal and vertical directions in a manner of being like a seal. This display allows the document to be visually displayed like a single icon.

According to the present invention, it becomes possible to display, within the limited screen size of a mobile telephone, lists whose number is larger than the number of the lists in the conventional one-dimensional list display. This feature allows enhancements in the listability and visibility.
The objects, features, and advantages of the present invention will become apparent from the following description of embodiments of the present invention associated with the accompanying drawings.

### BEST MODE FOR CARRYING OUT THE INVENTION

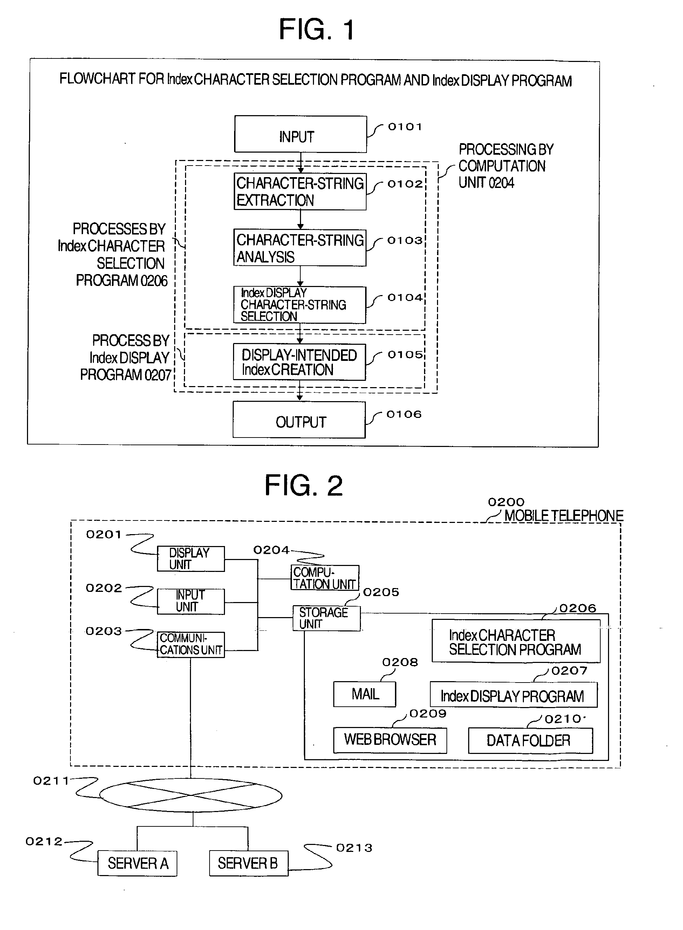

Hereinafter, referring to a processing flow in Fig. 1 and the configuration diagram of a mobile telephone in Fig. 2, the detailed explanation will be given below concerning a first embodiment of the present invention.

In the following embodiment, a mobile information terminal refers to a mobile appliance such as mobile telephone or PDA. A cursor refers to a mark for selecting a Chinese-character Index from a plurality of Chinese-character Indexes in a screen. A click refers to an input which is to be selected when the cursor is focused on the Chinese-character Index. Fig. 2 is the configuration diagram of a mobile telephone 200 which indicates an embodiment of the present invention. The mobile telephone 200 includes a display unit 201, an input unit 202, a communications unit 203, a computation unit 204, a storage unit 205, an Index character selection program 206, an Index display program 207, a mail function 208, a WEB browser 209, and a data folder 210. The mobile telephone 200 is connected to a server A212 and a server B213 via the Internet 211. Here, the servers A and B may also be replaced by other servers such as a WEB server, a mail server, and a file server as long as the other servers include text information.

It is assumed that, in addition to execution of communications, i.e., the original function of a mobile telephone, the mobile telephone 200 of the present invention also deals with such functions as acquisition of information provided by the mail 208, the WEB browser 209, and the server A212 and the server B213.

When the computation unit 204 starts up an Index character selection program 206, a Chinese-character Index is created from information in the mail and an address book stored in the storage unit 205. Then, in the display unit 201 of the mobile telephone 200, the Chinese-character Index created is displayed on the screen.

Next, the explanation will be given below concerning the processing flow of the Index character selection program 206.
In an input process 101, the computation unit 204 reads, as an input document and into the storage unit 205, the data stored in the mail 208, the WEB browser 209, and the data folder 210, and the data provided by the server A212 and the server B213. Fig. 4 illustrates an example of the input document. In a character-string extraction process 102, the computation unit 204 extracts Chinese characters from the document inputted in the input process 101. Fig. 5 illustrates the character-string extraction result, i.e., a sentence example including only the Chinese characters. In a character-string analysis process 103, the extracted character string is sorted in the descending order of the occurrence frequency, thereby creating a compact sentence. Fig. 6 illustrates the character-string analysis result, i.e., an example of the compact sentence. In an Index display character-string selection process 104, Chinese characters which are to be used for the Chinese-character Index are selected from the compact sentence. Fig. 7 illustrates an example of the Index target-character selection result.

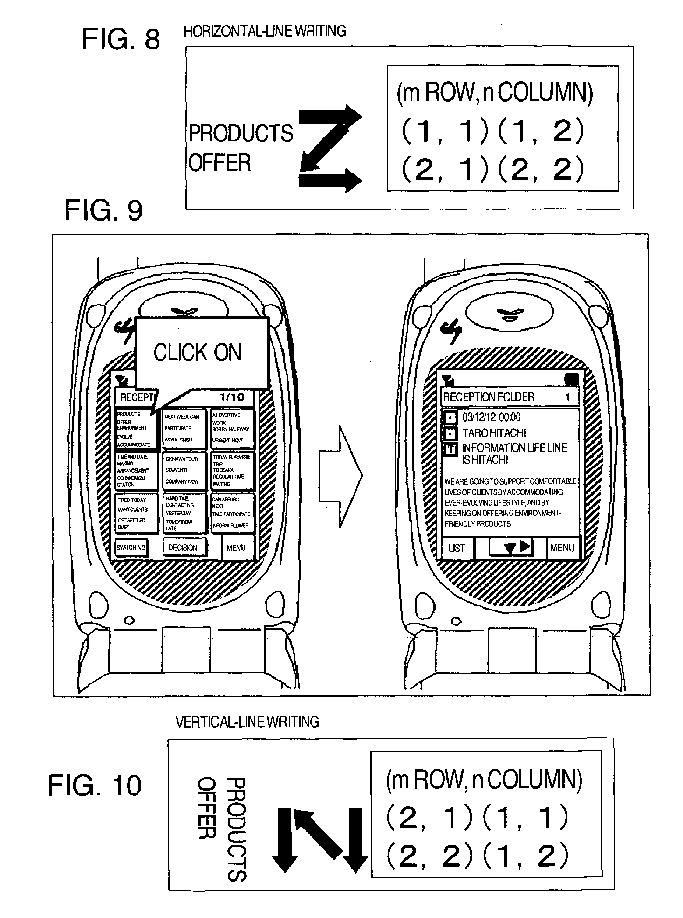

Next, the explanation will be given below concerning the processing flow of the Index display program 207 executed by the computation unit 204.
The computation unit 204 starts up the Index display program 207, then reading the Index target-character selection result. In a display-intended Index creation process 105, the display-intended Chinese-character Index is created by arranging the four Index target characters in a two-row × two-column location. Fig. 8 illustrates an example of the display-intended Chinese-character Index creation result. In an output process 106, the display-intended Chinese-character Index is outputted to the display unit 201 of the mobile telephone 200. The display unit 201 of the mobile telephone 200 displays the display-intended Chinese-character Index on the screen.

If the user clicks on the Chinese-character Index displayed on the screen, the input document, which is the origin of the Chinese-character Index, will be displayed. Fig. 9 illustrates the example at the time when the user clicks on the Chinese-character Index.

In addition to the dislocation of the cursor using a cross key and the click using a decision button, it is also made possible easily to select and decide the dislocation of the cursor and the click by causing the locations to correspond to dial keys of the mobile telephone 200 on a one-to-one basis.

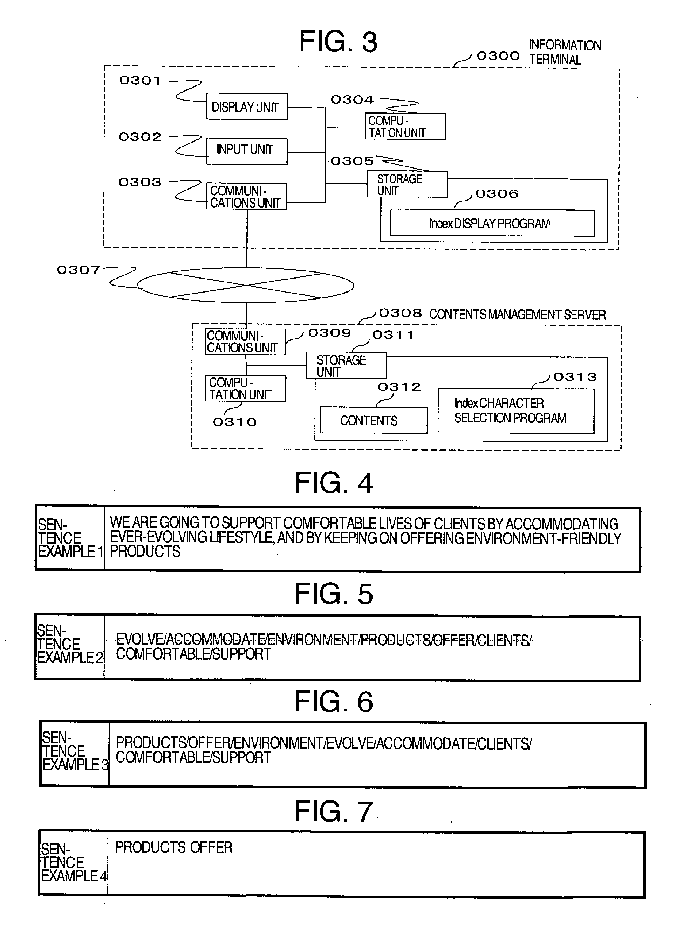

In the first embodiment, the example has been indicated where the Index character selection and the display-intended Index creation are performed inside the mobile telephone 200. It is also possible, however, that the Chinese-character Index corresponding to the contents in the server A212 or the server B213 will be serviced like the title by allocating the Index character selection and the display-intended Index creation to the mobile telephone 200 and the server respectively.
Hereinafter, referring to Fig. 3, the explanation will be given below concerning a second embodiment of the present invention where a contents management server 308 is used.

Inside the contents management server 308, as an information processible configuration for the Index display target-character creation, there are provided a communications unit 309, a computation unit 310, a storage unit 311, contents 312 stored in the storage unit 311, and an Index character selection program 313. The processes up to the Index target character-string selection are executed in the processing flow of the Index creation illustrated in Fig. 1. Then, the Index target character string created is transferred to an information terminal 300 in a manner of being attached to the WEB data and contents corresponding thereto. In the information terminal 300, in the display-intended Index creation process 105, i.e., the remaining process illustrated in Fig. 1, an Index display program 306 is executed using the Index target character string received, thereby creating the display-intended Chinese-character Index. In the output process 106, the Index is displayed on a display unit 301.

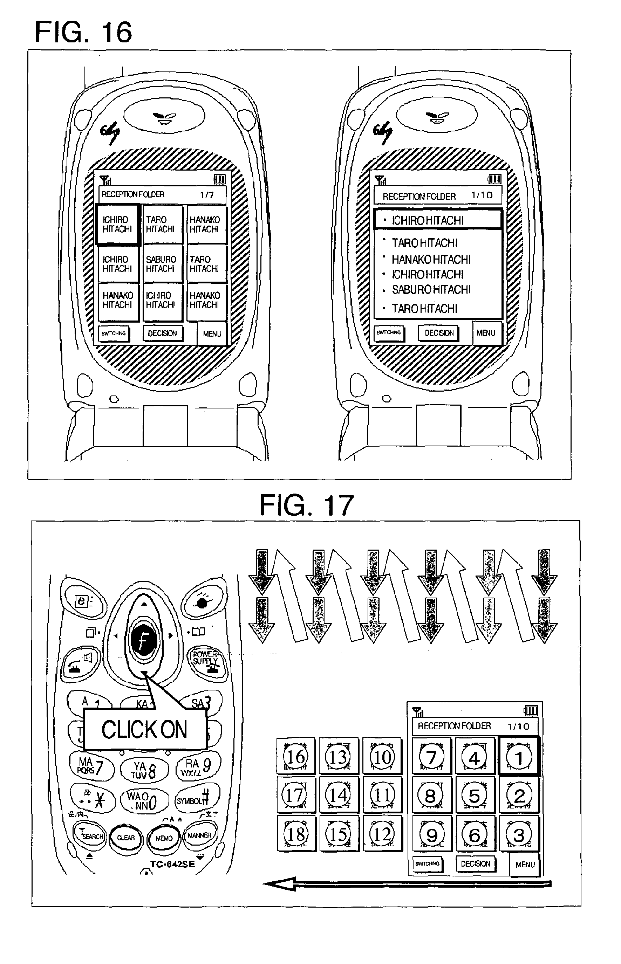

In the first embodiment, the example has been indicated where the Index character selection and the display-intended Index creation are performed inside the mobile telephone 200. In the second embodiment, the example has been indicated where the Index character selection is performed inside the contents management server 308, and where the display-intended Index creation is performed inside the information terminal 300. It is also possible, however, to implement the case where, similarly in the first embodiment, the Index character selection program 313 and the Index display program 306 are located in the storage unit 311 of the contents management server 308. This makes it possible to provide the expression of the Chinese-character Index to a user as well of a mobile telephone or information terminal not corresponding to the Chinese-character Index. Regarding the WEB data as well, the WEB server allows the service of the Chinese-character Index similarly.
In the first and second embodiments, the examples have been indicated where the display method for the Chinese-character Index is the horizontal-line writing. It is also made possible easily, however, to change the horizontal-line writing display to the vertical-line writing display by rearranging the character string like an example in Fig. 10.
In the vertical-line writing display, like an example in Fig. 17, the screen is scrolled in the horizontal direction. In a state where the cursor exists at the lower end in each row, when trying to displace the cursor in the lower direction further, the cursor is displaced to the upper end of a row which is left-adjacent thereto.

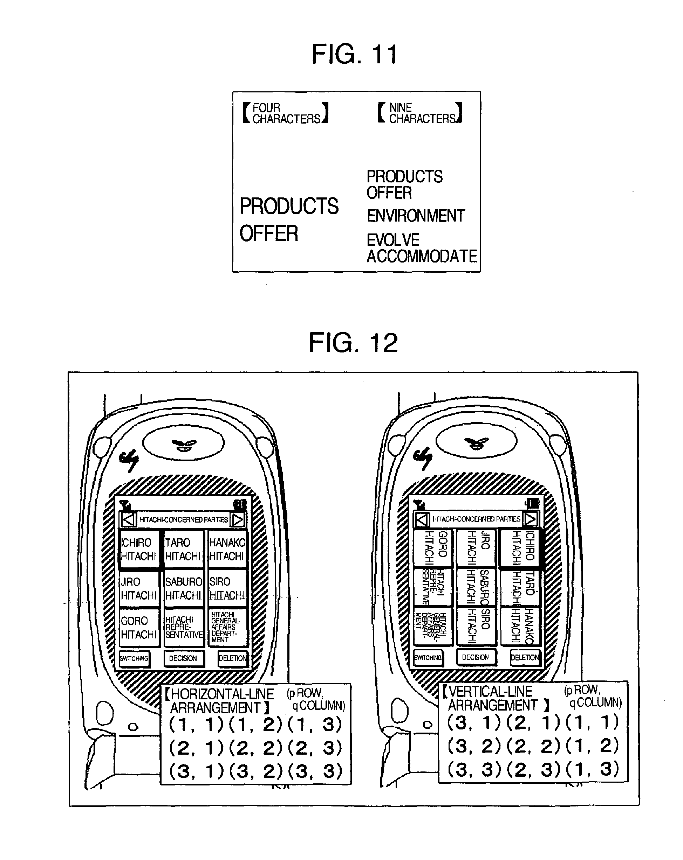

In the first and second embodiments, the examples have been indicated where the Chinese-character Index is displayed in the two-row × two-column arrangement. It is also made possible easily, however, to display the Chinese-character Index as an m-row × n-column arrangement using m × n characters. In particular, Fig. 11 illustrates a display example of a three-row × three-column arrangement.

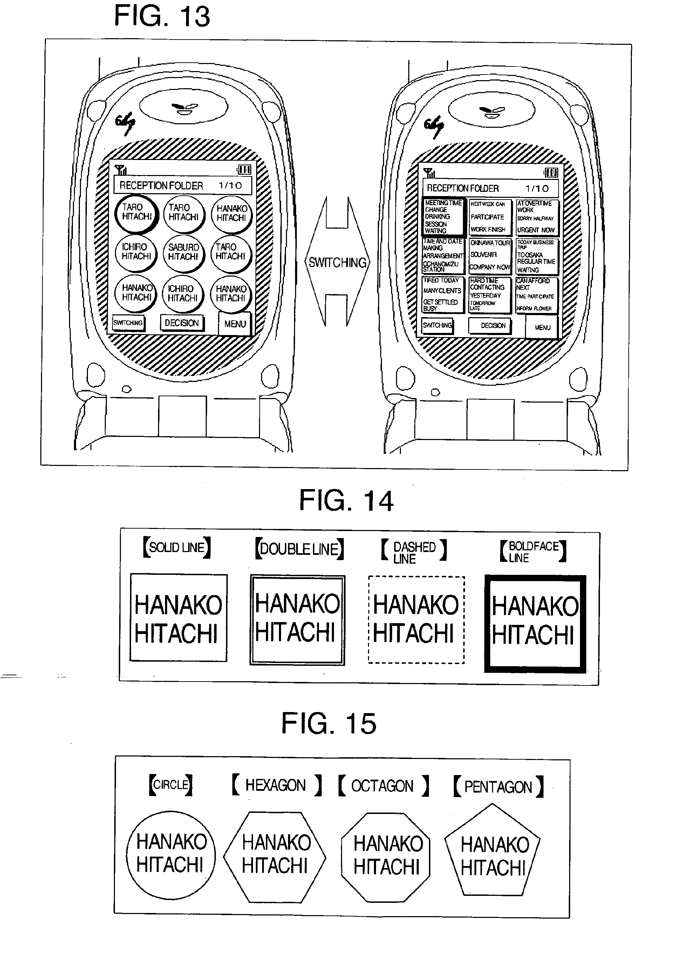

In the first and second embodiments, as examples of trying to enhance the overview estimation and accessibility based on the listability, visibility, and brief-summary effect, the following items are also included in the target for the documents whose Chinese-character Indexes are to be created:
(1) the address book stored in the mobile telephone (Fig. 12 illustrates an example)
(2) the mail list stored in the mobile telephone (Fig. 13 illustrates an example)
(3) schedule stored in the mobile telephone
(4) memorandum stored in the mobile telephone
(5) the WEB contents: the information being acquirable via the Internet and provided by the server A212 and the server B213. The original contents are caused to correspond thereto for each Chinese-character Index.
(6) the information communicated between the mobile telephones: e.g., the data in the address book, mail, schedule, and memorandum in infrared-rays communications
(7) status information on the mobile telephone: e.g., manner mode, silent mode, undercharging mode, open/close state, radio-wave situation, battery remaining-quantity, on/off of power-supply, and information stored in external memory.
(8) information on program names, key words, and tune numbers in ground-wave analogue broadcast, ground-wave digital broadcast, and radio broadcast, and character broadcast.

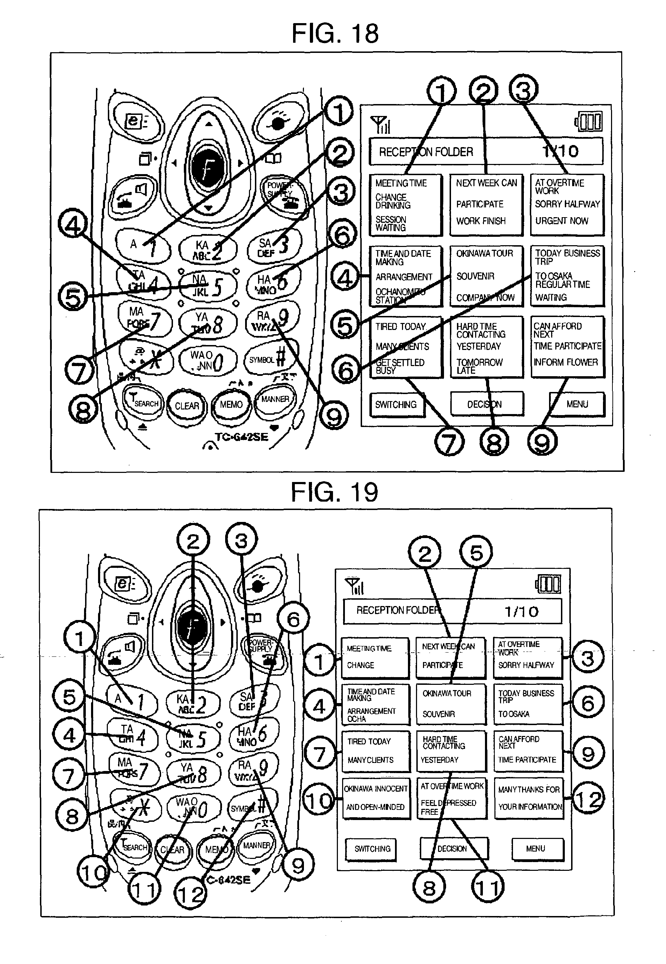

Also, as illustrated in Fig. 13, it is also possible to display the sender names and the Chinese-character Indexes of the mail texts by switching the above-described display methods with, e.g., the button operation.
Also, as illustrated in Fig. 18 and Fig. 19, the locations of the Chinese-character Indexes and the dial keys of the mobile telephone are caused to correspond to each other on a one-to-one basis. As a result of this correspondence, pushing a dial key makes it possible to select and decide the Chinese-character Index corresponding thereto. In particular, Fig. 18 illustrates the display example of the three-row × three-column Chinese-character Index. Fig. 19 illustrates a four-row × three-column display example of a two-row × three-column Chinese-character Index. In this way, the two-dimensionally located buttons are a selection method which is applicable to many information terminals such as a ten-key numeric pad and a desktop calculator, not being limited to the dial keys of the mobile telephone alone.

In the first and second embodiments, in order to try to enhance the visibility and listability, the following methods are executable as methods for distinguishing between the Chinese-character Indexes which are adjacent to each other.
(1) Like examples in Fig. 14, the circumferences are surrounded by frame lines. In particular, Fig. 14 illustrates the display examples with a solid line, a double line, a dashed line, and a boldface line.
(2) Like examples in Fig. 15, the configuration of the surrounding frame lines includes cases of polygons and a circle. In particular, Fig. 15 illustrates the display examples with a circle, a hexagon, an octagon, and a pentagon.

On account of the Chinese-character Index display, as illustrated in an example in Fig. 16, a mail list, which has been list-displayed in six rows in the conventional mobile telephone, can be implemented as nine list displays at a time. This is accomplished as follows: Namely, nine Chinese-character Indexes, each of which is created using four characters arranged in a two-row × two-column arrangement, are displayed by being located in a three-row × three-column arrangement on the screen of the mobile telephone. This implementation has allowed an enhancement in the listability and visibility. Also, utilizing the Indexes having high impressive similarity permits implementation of the visual content estimation, thereby making it possible to implement a time shortening in the information grasping and an enhancement in the accessibility.

The present invention is available in information communications fields via the network.
The above-described description has been given in accompaniment with the embodiments. It is apparent for those who are skilled in the art, however, that the present invention is not limited thereto, and that a variety of modifications and amendments can be made within the spirit of the present invention and the scope of the appended claims.

### BRIEF DESCRIPTION OF THE DRAWINGS

[Fig. 1] A block diagram for illustrating an embodiment of processing steps of the present invention.
[Fig. 2] Illustrates an example in a mobile telephone.
[Fig. 3] Illustrates an example by a mobile terminal and a contents management server.
[Fig. 4] Illustrates an example of the input document.
[Fig. 5] Illustrates an example of the result of character-string extraction.
[Fig. 6] Illustrates an example of the result of character-string analysis.
[Fig. 7] Illustrates an example of the result of Chinese-character Index target-character selection.
[Fig. 8] Illustrates an example where the Chinese-character Index is displayed in horizontal-line writing.
[Fig. 9] Illustrates an example at the time when user clicks on the Chinese-character Index.
[Fig. 10] Illustrates an example where the Chinese-character Index is displayed in vertical-line writing.
[Fig. 11] Illustrates an example where the Chinese-character Index is displayed with 3 × 3 (= 9) characters.
[Fig. 12] Illustrates an example of implementing the Chinese-character Index display of the address book of a mobile telephone.
[Fig. 13] Illustrates an example of implementing the Chinese-character Index display of the mail list of the mobile telephone.
[Fig. 14] Illustrates an example where the Chinese-character Index is displayed using frame lines.
[Fig. 15] Illustrates an example where the Chinese-character Index is displayed using polygonal frame lines.
[Fig. 16] Illustrates an example where the comparison is made between the conventional list display and the Chinese-character Index display.
[Fig. 17] Illustrates an example of cursor dislocation at the time of the vertical-line arrangement display.
[Fig. 18] Illustrates an example of the correspondence between the Chinese-character Index and the dial keys of a mobile telephone.
[Fig. 19] Illustrates an example of the correspondence between the Chinese-character Index and the dial keys of the mobile telephone.

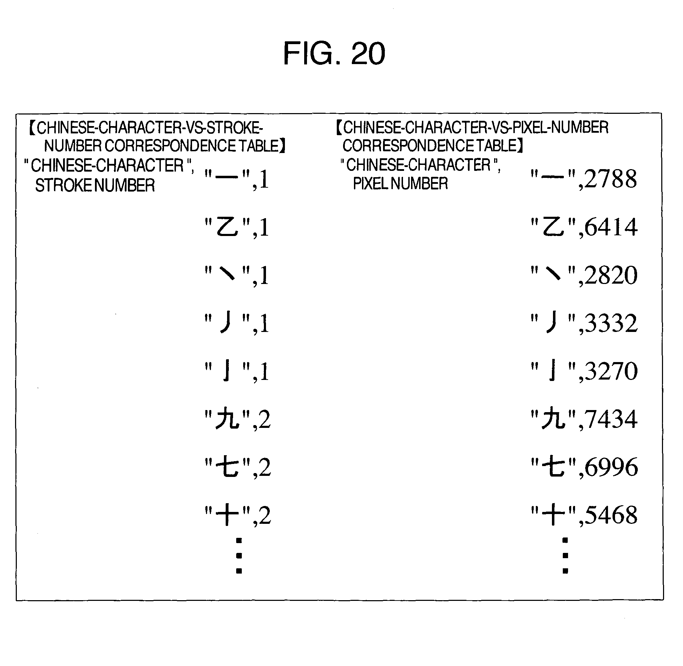

[Fig. 20] Illustrates an example of the Chinese-character-vs-stroke-number correspondence table and the Chinese-character-vs-pixel-number correspondence table.

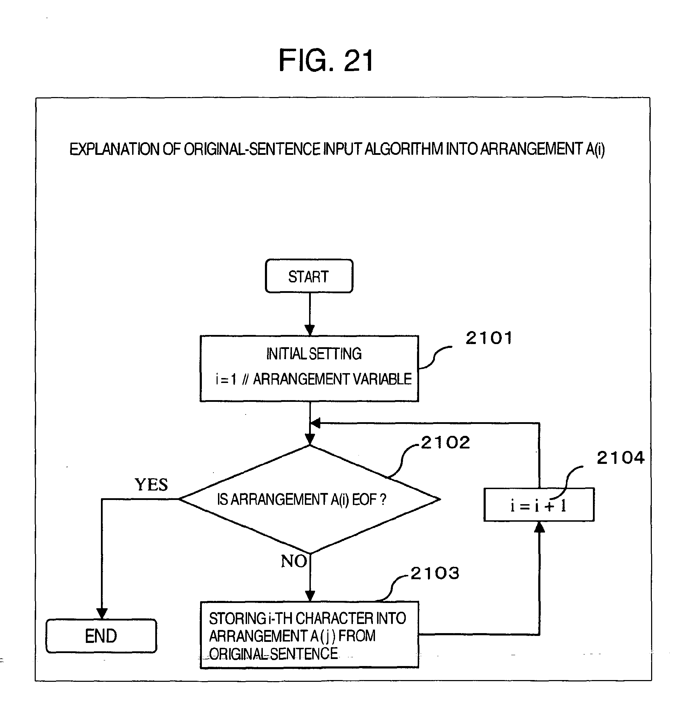

[Fig. 21] Illustrates an explanation of an original-sentence input algorithm into an arrangement A(i);

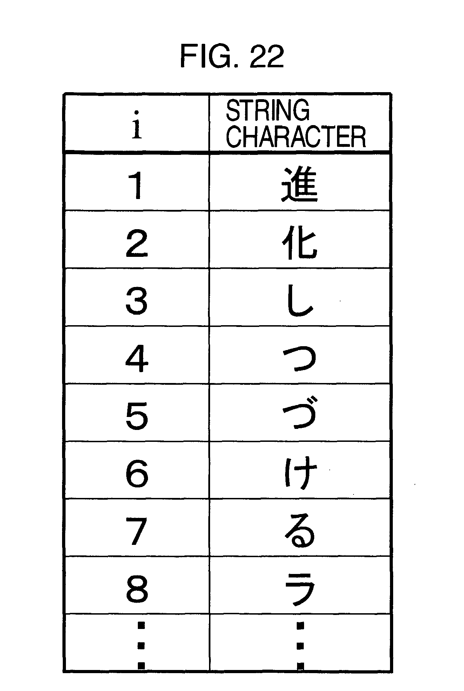

[Fig. 22] Illustrates a content example of the arrangement A(i).

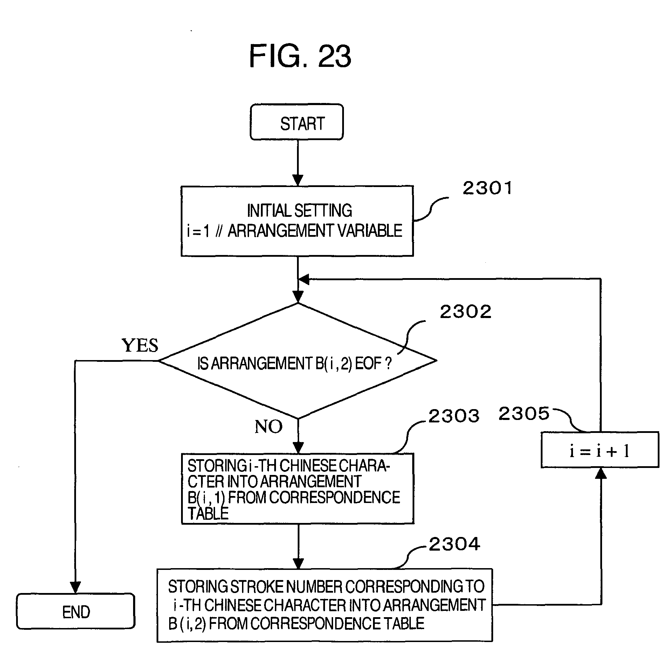

[Fig. 23] Illustrates an explanation of a correspondence-table input algorithm into an arrangement B(i, j).

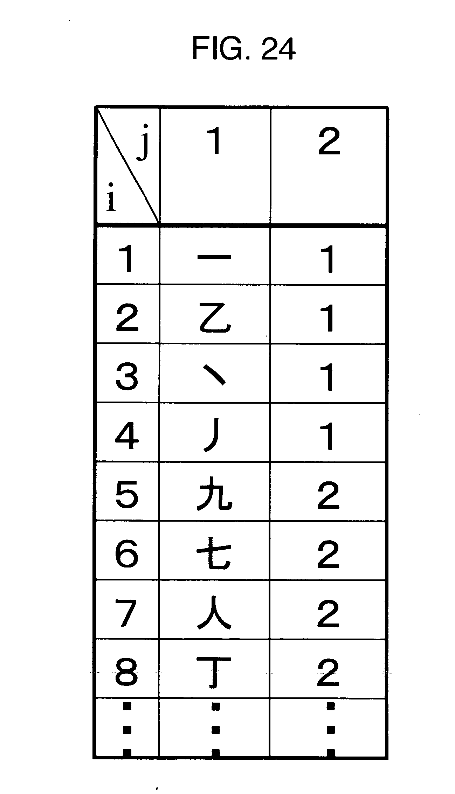

[Fig. 24] Illustrates an example of characters and the stroke number stored into the arrangement B(i, j).

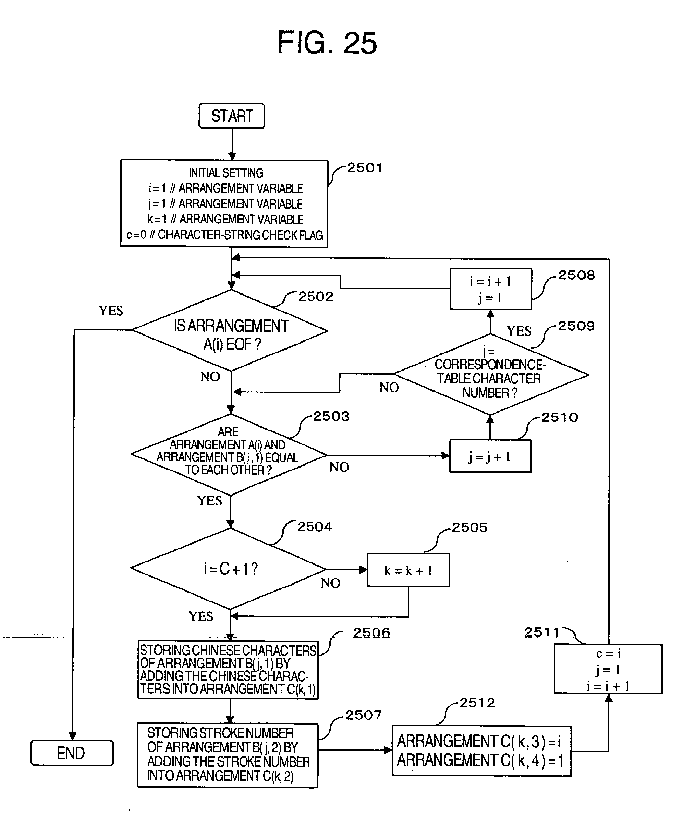

[Fig. 25] Illustrates an explanation of the Chinese-character-string extraction algorithm for storing the Chinese-character string, stroke number, occurrence order, and occurrence frequency into an arrangement C(i, j).

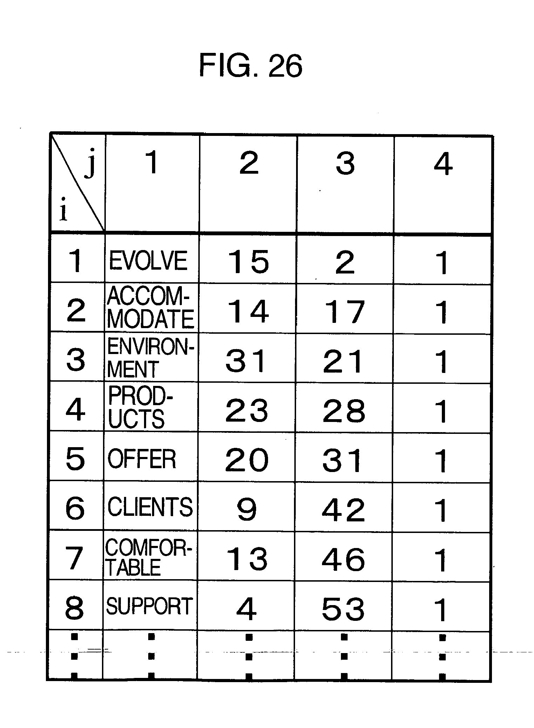

[Fig. 26] Illustrates an example of the Chinese-character string, stroke number, occurrence order, and occurrence frequency stored into the arrangement C(i, j) in the Chinese-character-string extraction process.

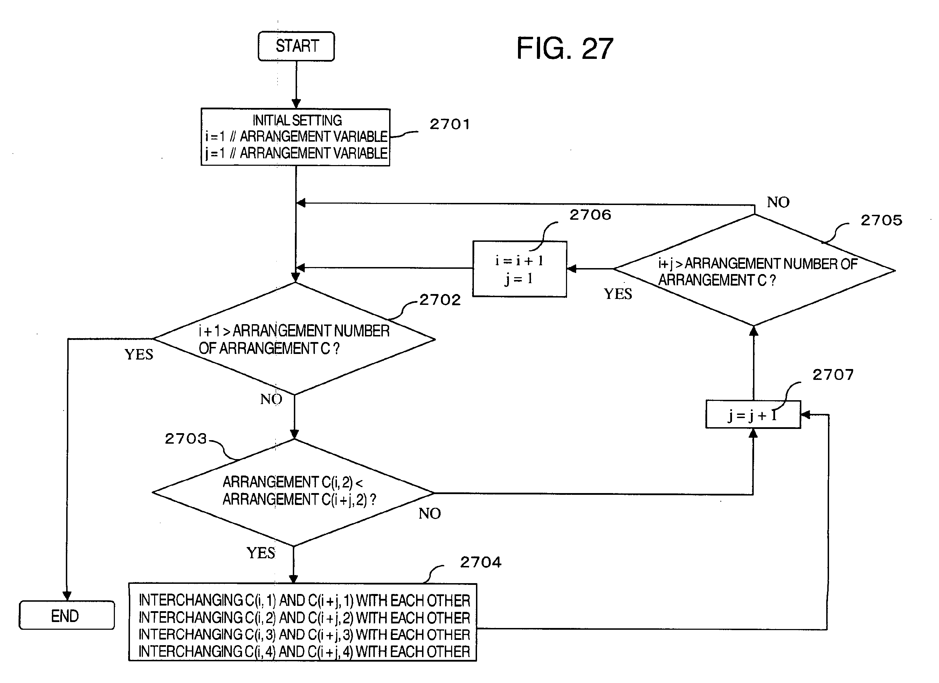

[Fig. 27] Illustrates an explanation of a sort algorithm for the arrangement C(i, j) using the stroke number method.

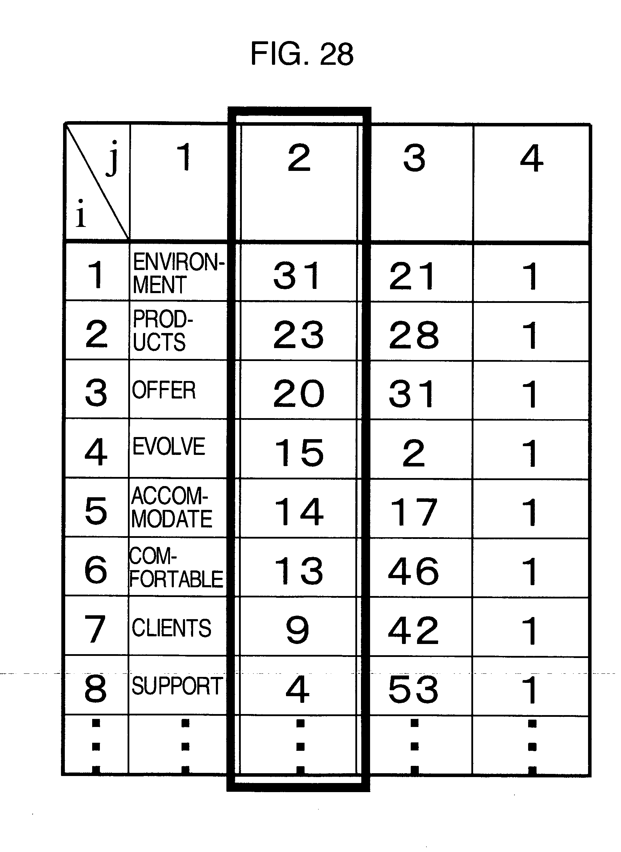

[Fig. 28] Illustrates an example of the sort result of the arrangement C(i, j) based on an arrangement C(i, 2) using the stroke number method.

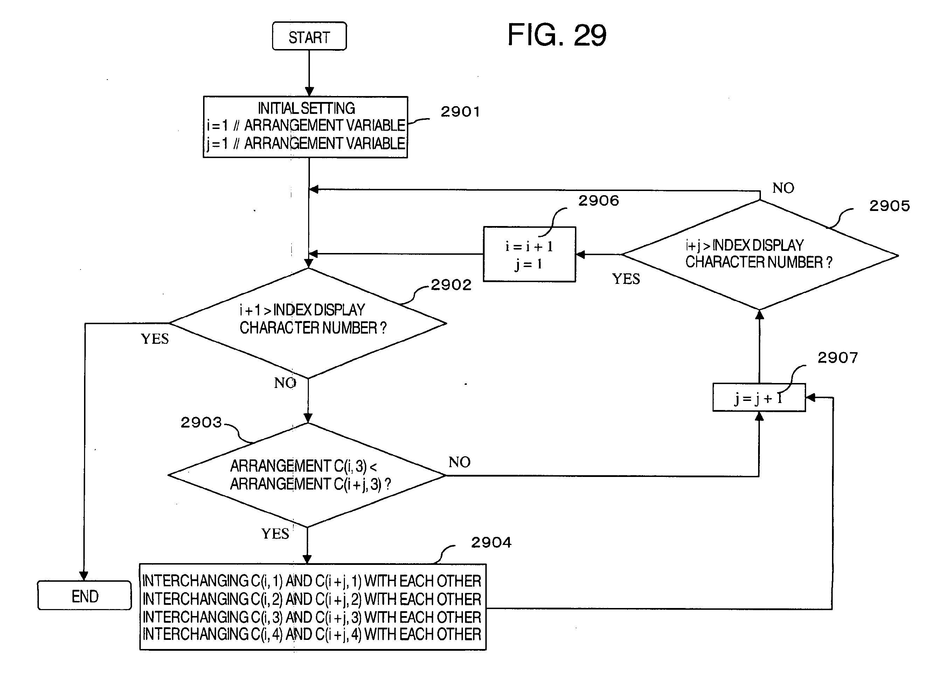

[Fig. 29] Illustrates an explanation of the sort algorithm based on an arrangement C(i, 3) by the FIFO sort of the character-string analysis result using the stroke number method.

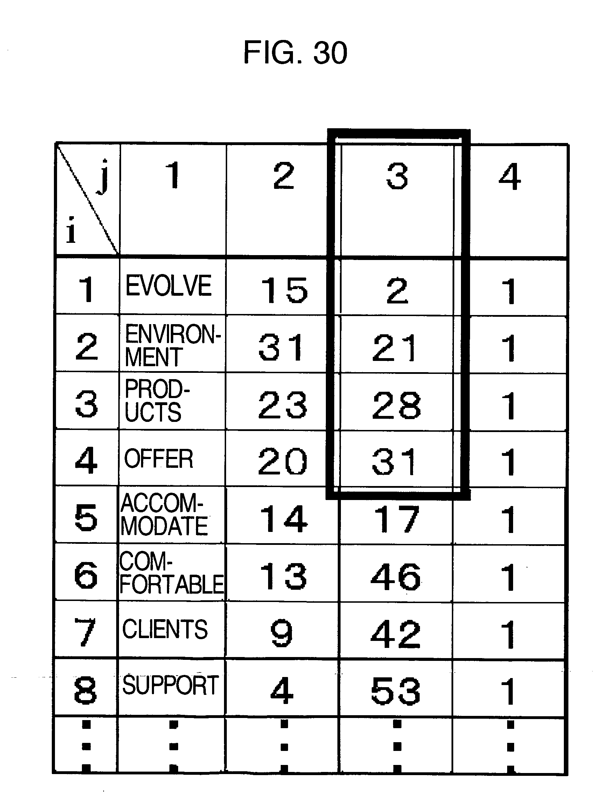

[Fig. 30] Illustrates an example of the sort result of the arrangement C(i, j) based on the arrangement C(i, 3) by the FIFO sort of the character-string analysis result using the stroke number method.

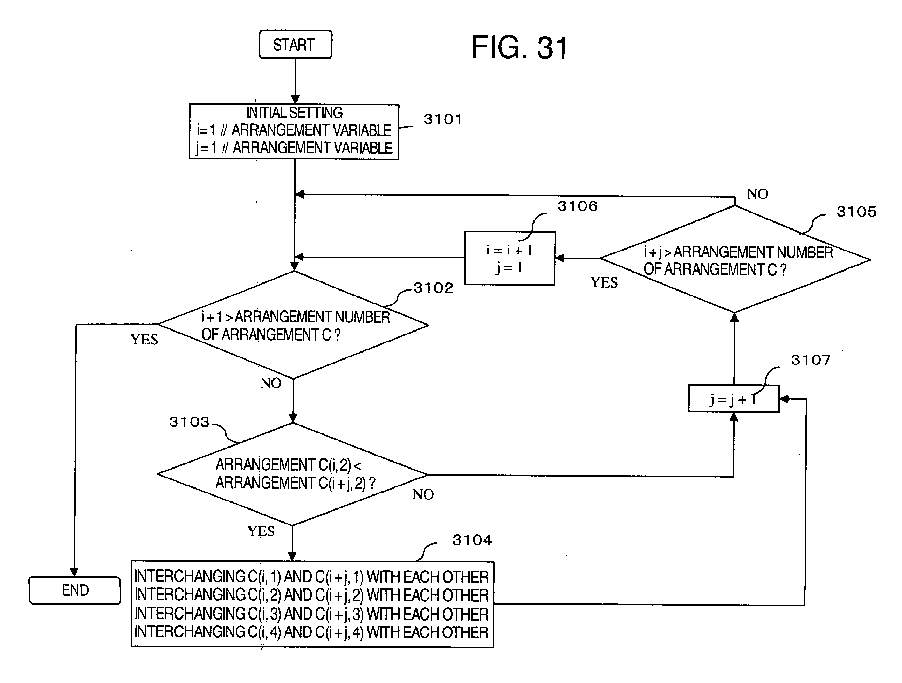

[Fig. 31] Illustrates an explanation of the sort algorithm for an arrangement C using the stroke number method.

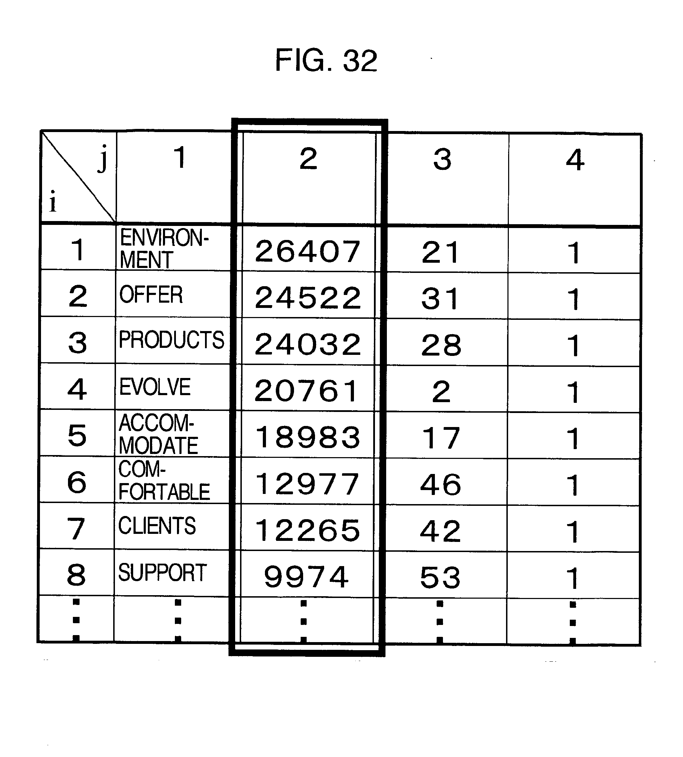

[Fig. 32] Illustrates an example of the sort result of the arrangement C(i, j) based on the arrangement C(i, 2) using the stroke number method.

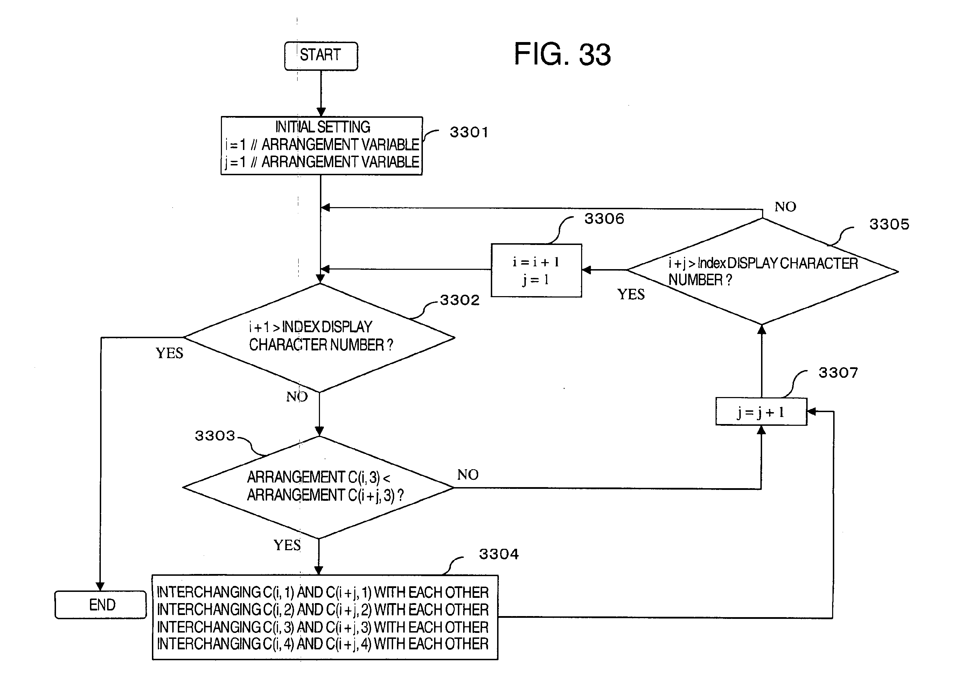

[Fig. 33] Illustrates an explanation of the sort algorithm based on the arrangement C(i, 2) and the arrangement C(i, 3) by the FIFO sort of the character-string analysis result using the stroke number method.

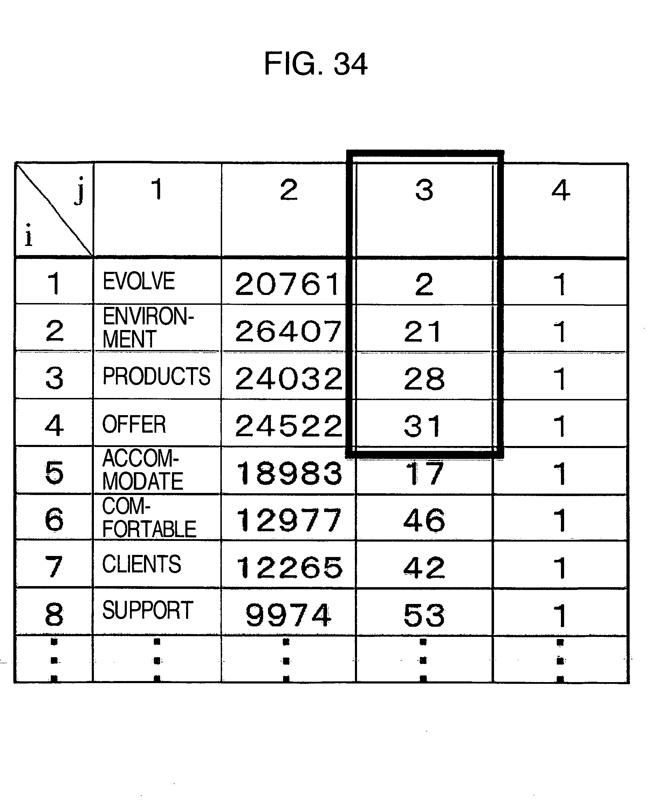

[Fig. 34] Illustrates an example of the sort result of the arrangement C(i, j) based on the arrangement C(i, 2) and the arrangement C(i, 3) by the FIFO sort of the character-string analysis result using the stroke number method.

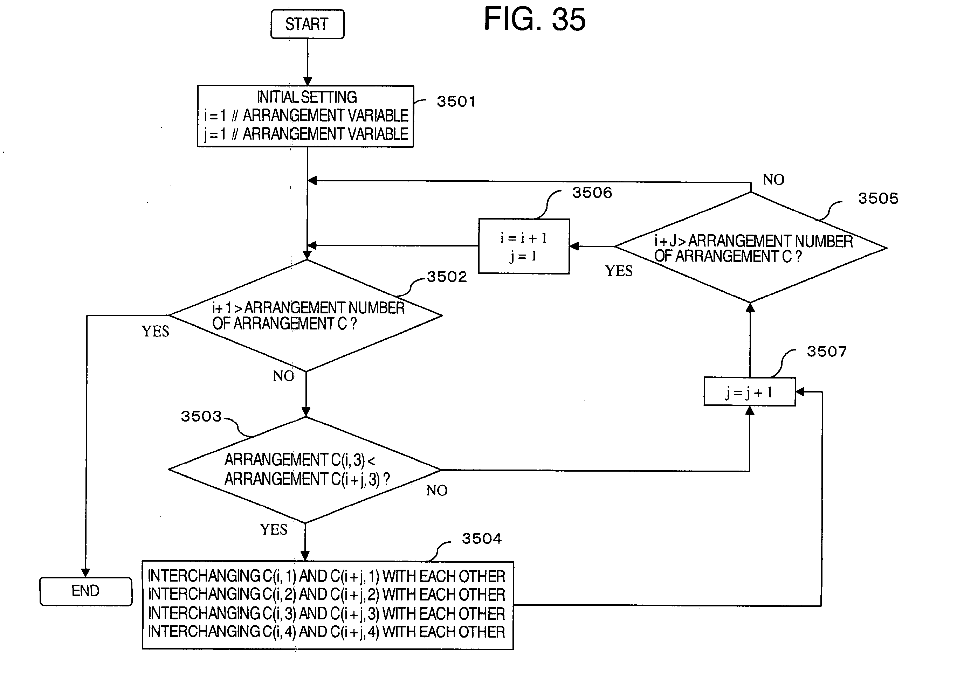

[Fig. 35] Illustrates an explanation of the sort algorithm for the arrangement C using the FIFO method.

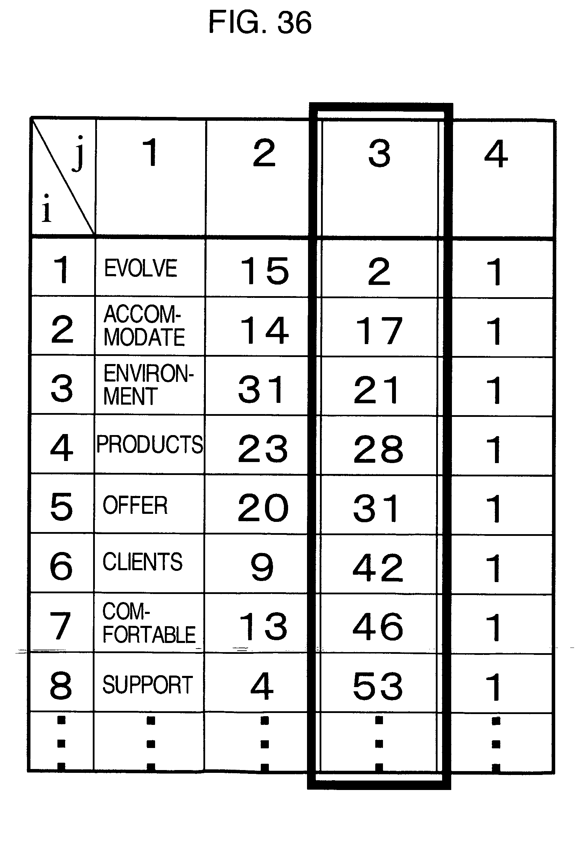

[Fig. 36] Illustrates an example of the sort result of the arrangement C(i, j) based on the arrangement C(i, 3) using the FIFO method.

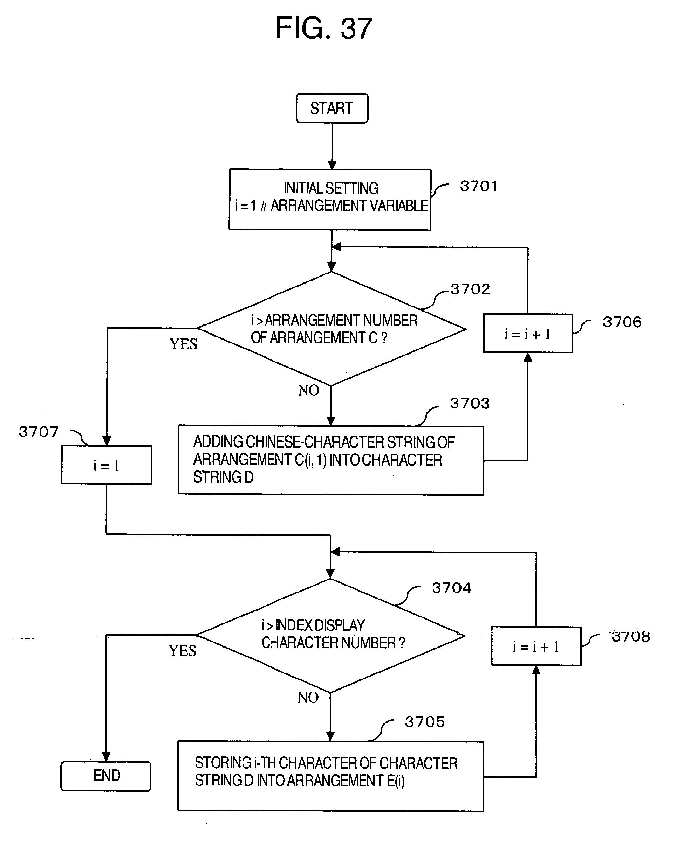

[Fig. 37] Illustrates an explanation of an Index display character-string selection algorithm.

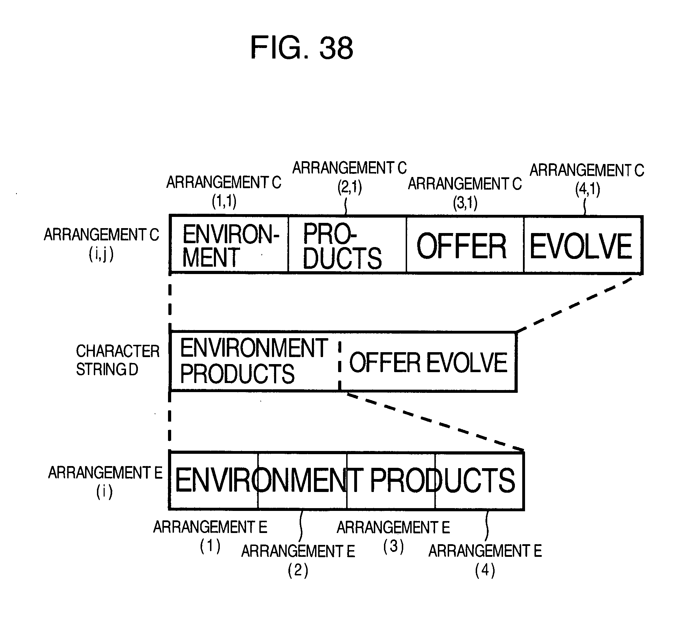

[Fig. 38] Illustrates a content example of an arrangement E(i) in the Index display character-string selection.

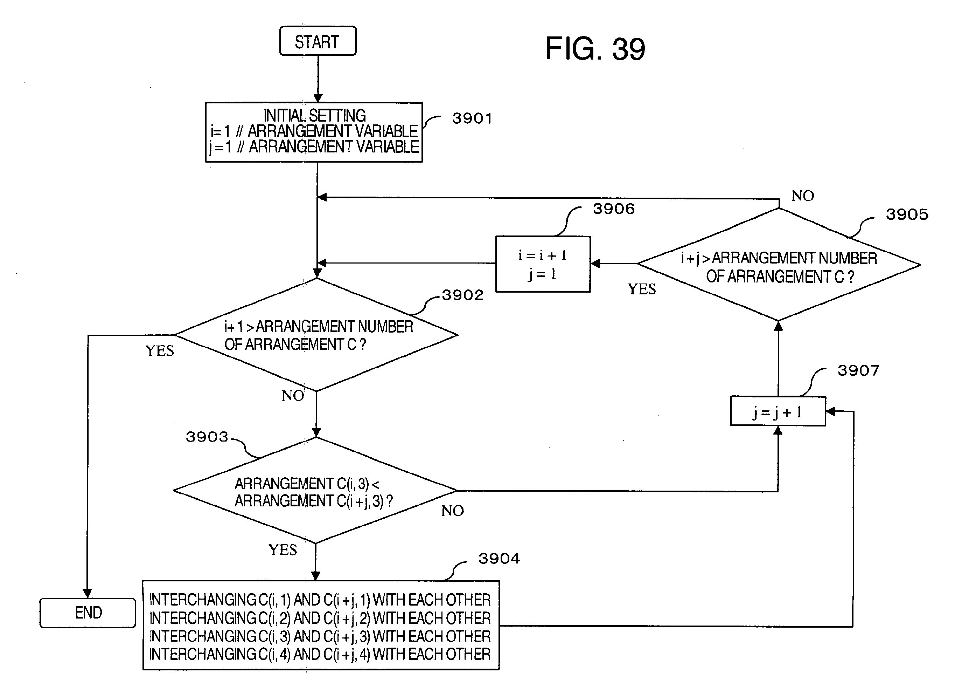

[Fig. 39] Illustrates an explanation of the sort algorithm for the arrangement C using the FIFO method.

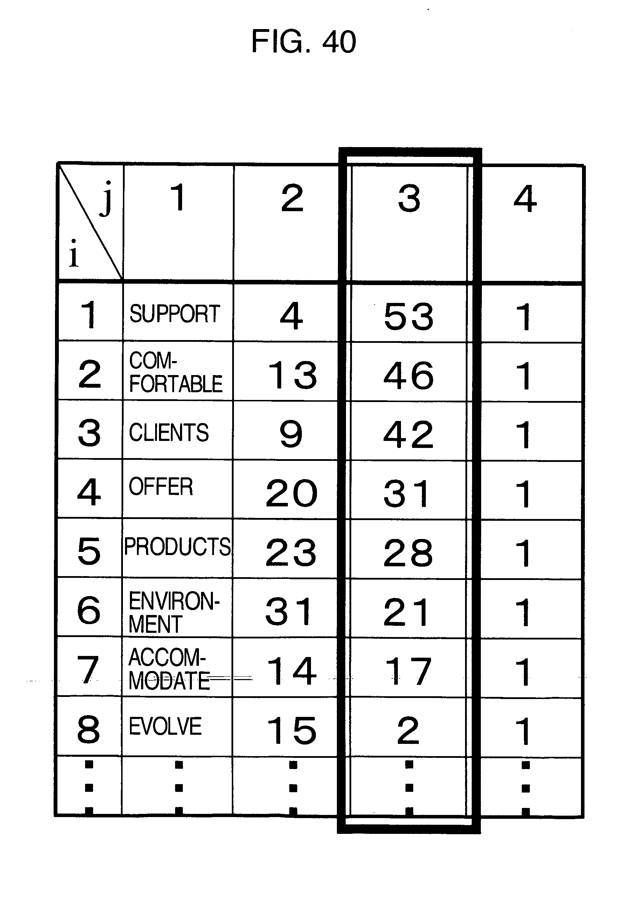

[Fig. 40] Illustrates an example of the sort result of the arrangement C(i, j) based on the arrangement C(i, 3) using the FIFO method.

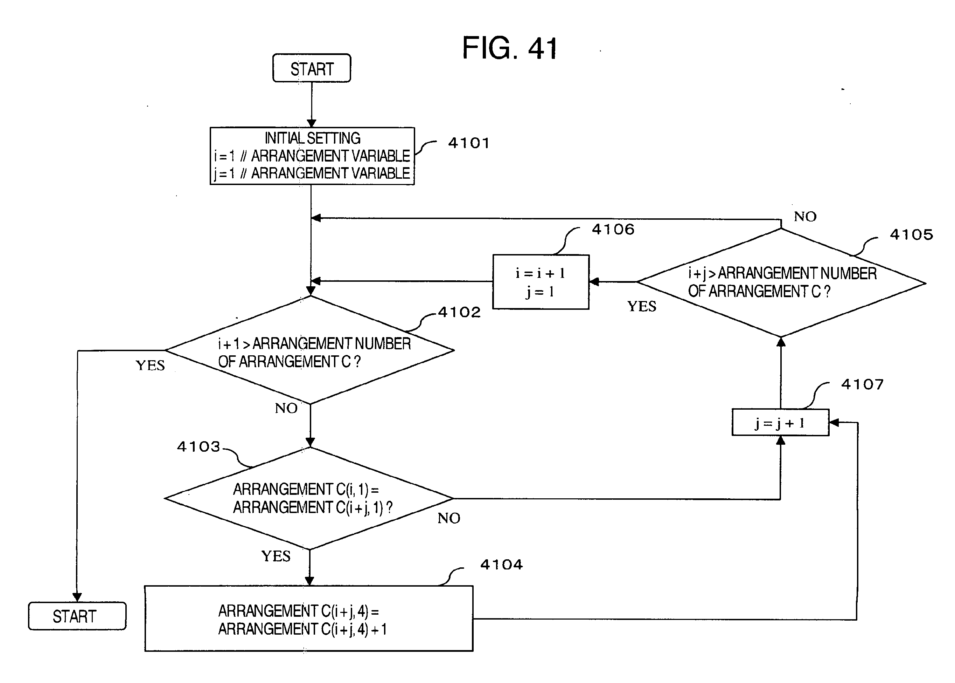

[Fig. 41] Illustrates an explanation of an algorithm for counting the Chinese-character-string occurrence frequency in an arrangement C(i, 4).

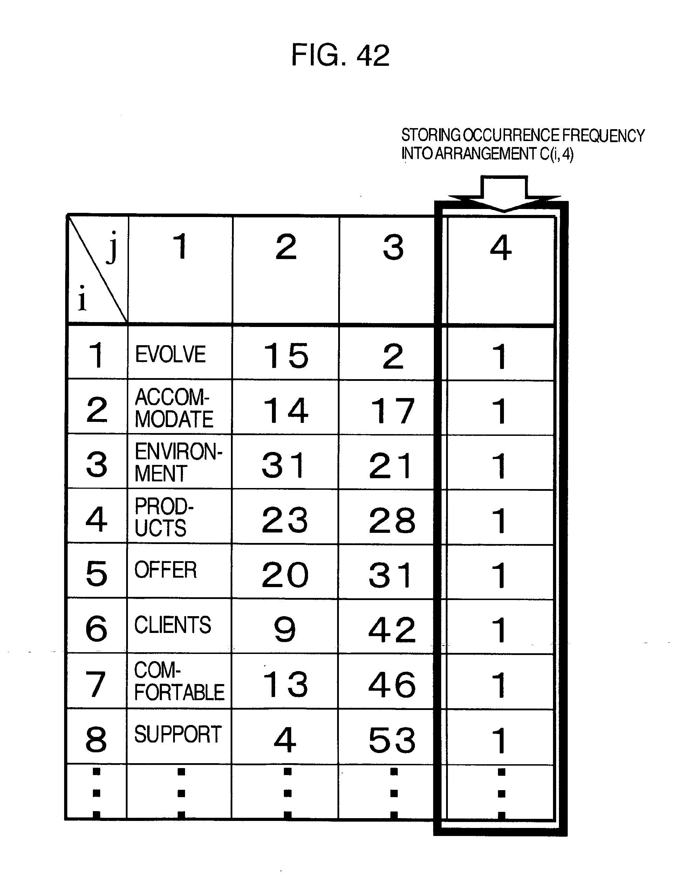

[Fig. 42] Illustrates a content example of the arrangement C(i, j) where the Chinese-character-string occurrence frequency is stored into the arrangement C(i, 4).

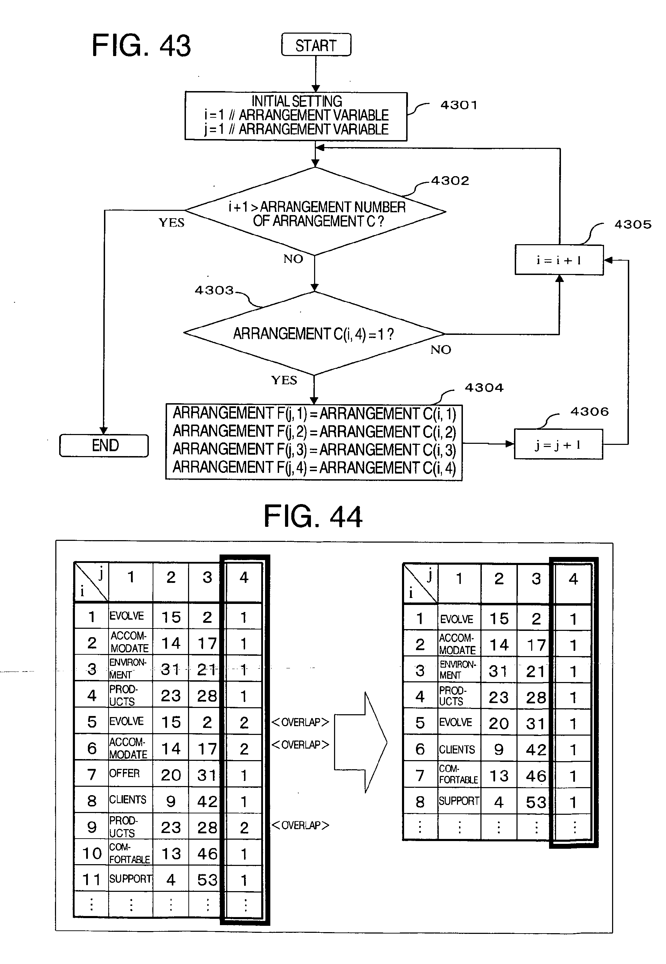

[Fig. 43] Illustrates an explanation of an algorithm for eliminating overlapped Chinese-character strings based on the arrangement C(i, 4).
[Fig. 44] Illustrates a content example of the arrangement C(i, j) where the overlapped Chinese-character strings are eliminated based on the arrangement C(i, 4).

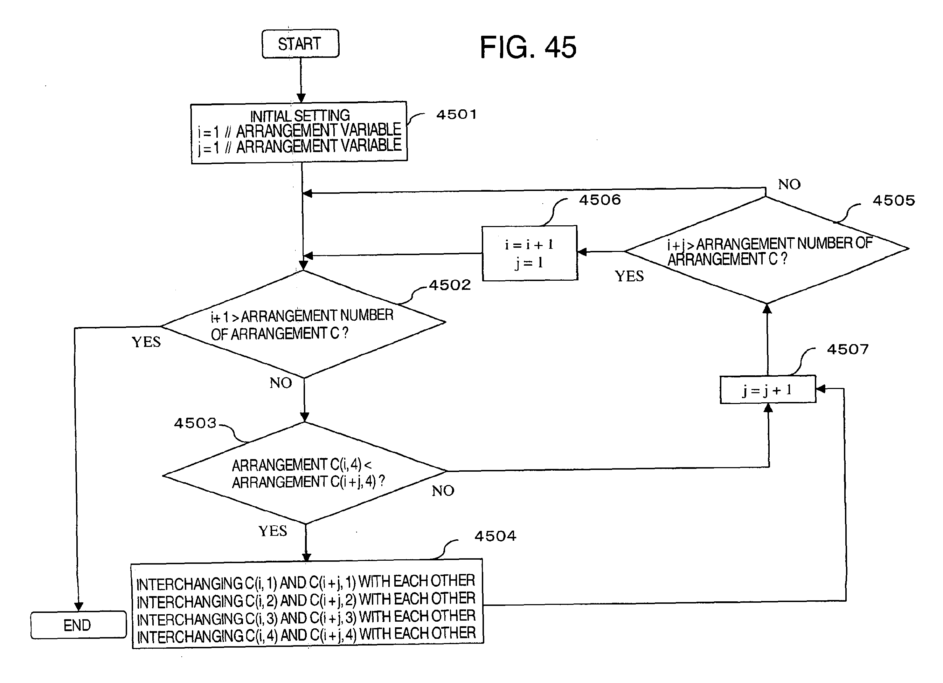

[Fig. 45] Illustrates an explanation of the sort algorithm for the arrangement C using the frequency method.

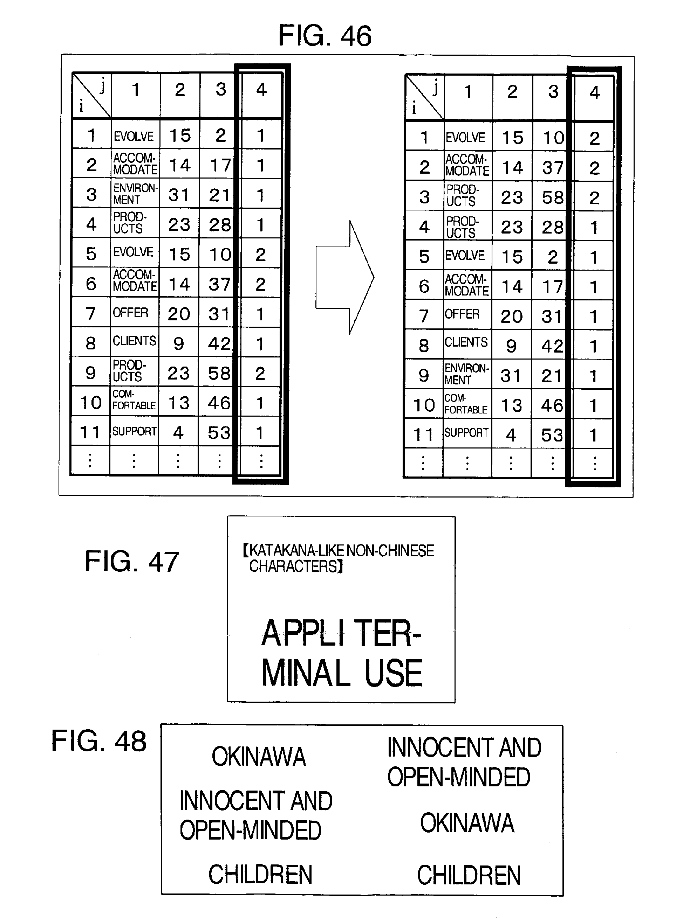

[Fig. 46] Illustrates an example of the sort result of the arrangement C(i, j) based on the arrangement C(i, 4) using the frequency method.
[Fig. 47] Illustrates an example (6) of the Index creation result.
[Fig. 48] Illustrates an example (7) of the Index creation result.

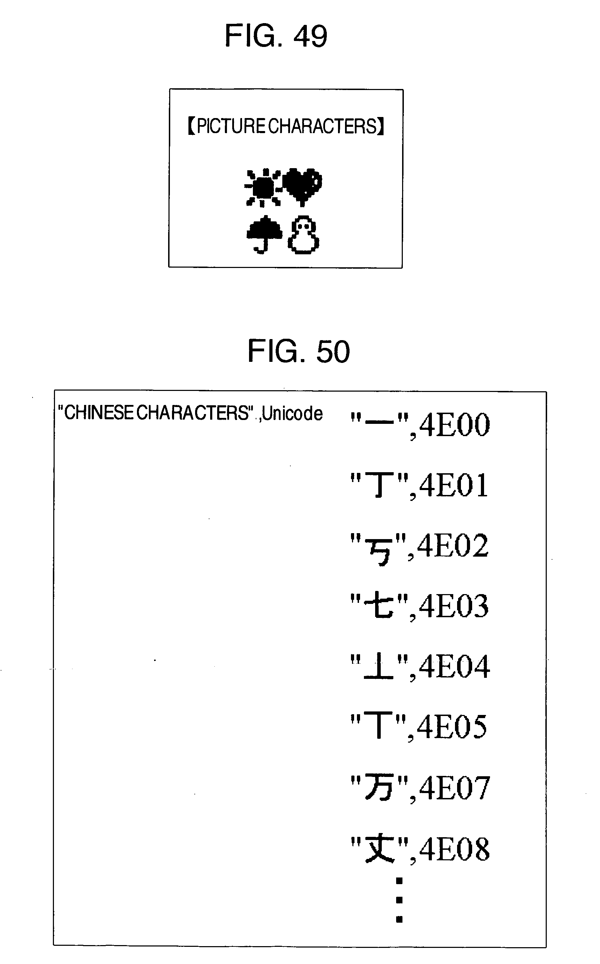

[Fig. 49] Illustrates an example (8) of the Index creation result.
[Fig. 50] Illustrates an example of the Unicode correspondence table.

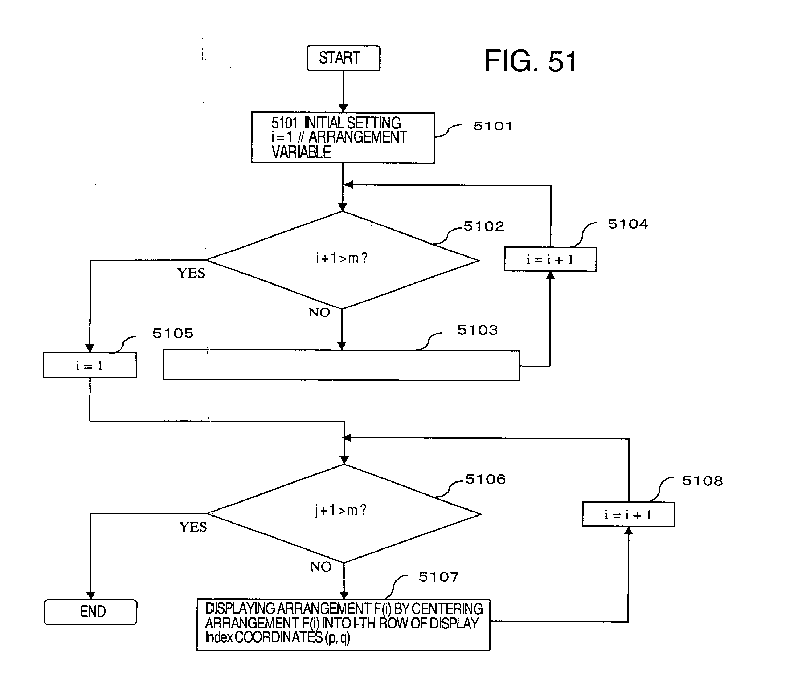

[Fig. 51] Illustrates an explanation of an algorithm for the line-feed display by centering in the Index m-row × n-column display.

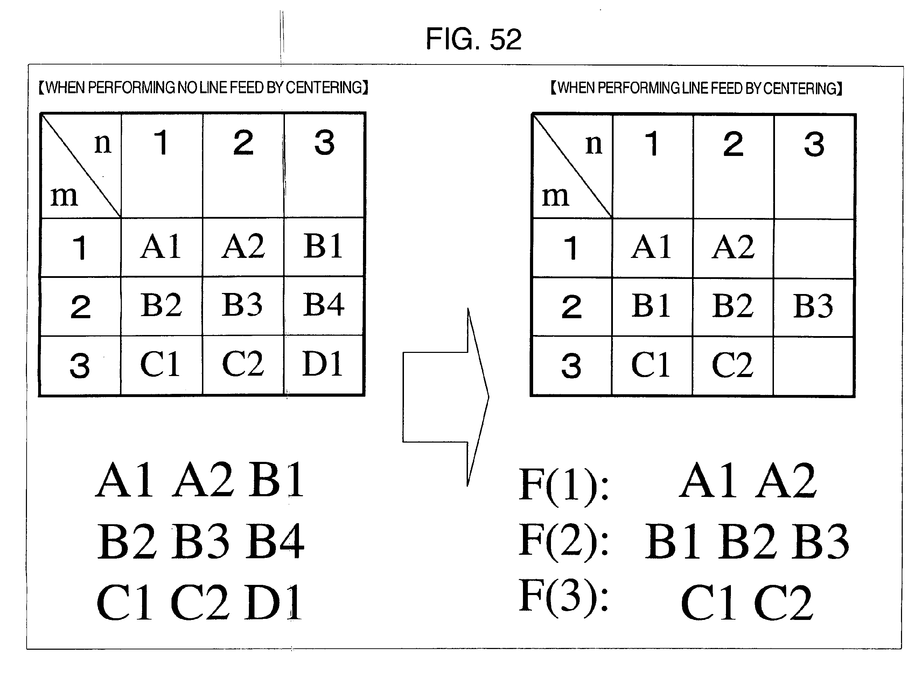

[Fig. 52] Illustrates an example of the line-feed display by the centering.

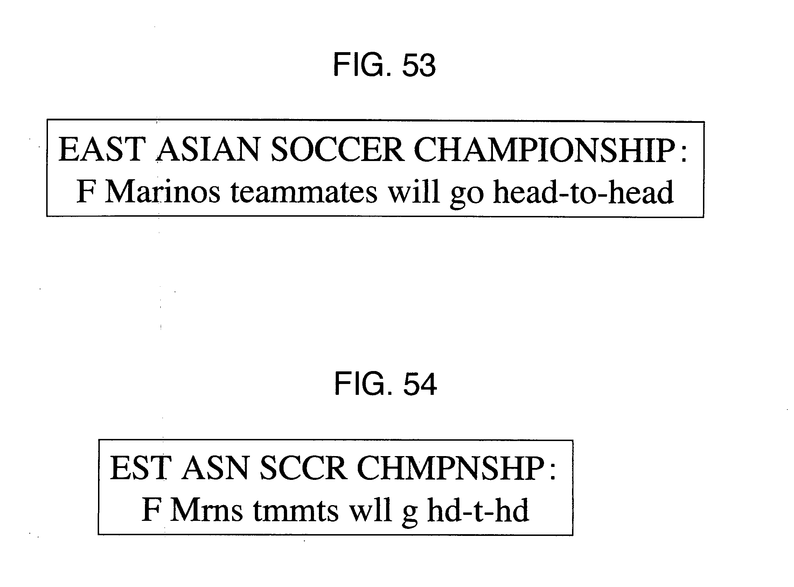

[Fig. 53] Illustrates an example of a document in phonetic characters.
[Fig. 54] Illustrates an example of the character-string extraction in the phonetic characters.

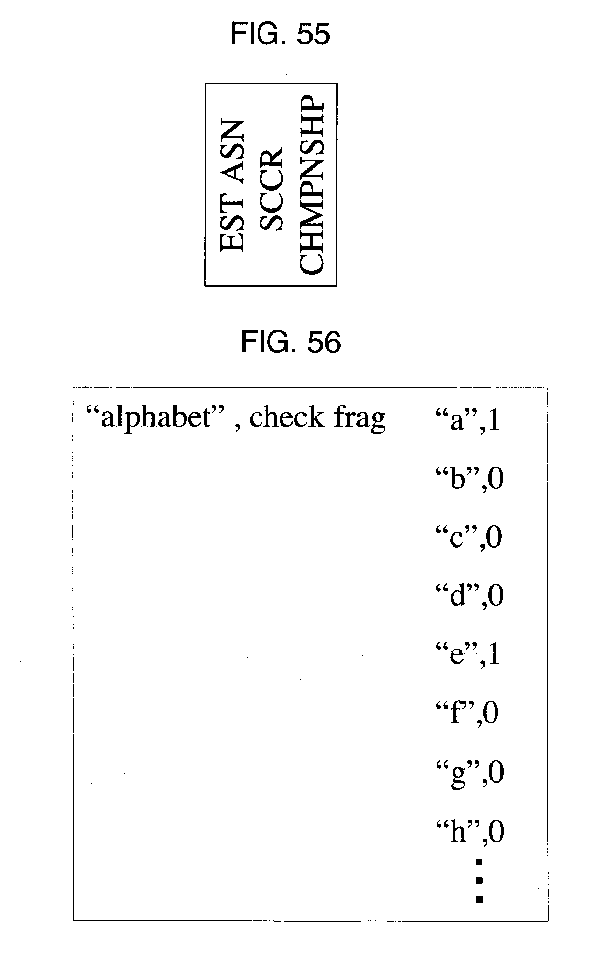

[Fig. 55] Illustrates an example of the Index creation and display in the phonetic characters.
[Fig. 56] Illustrates an example of the correspondence table in the phonetic characters.

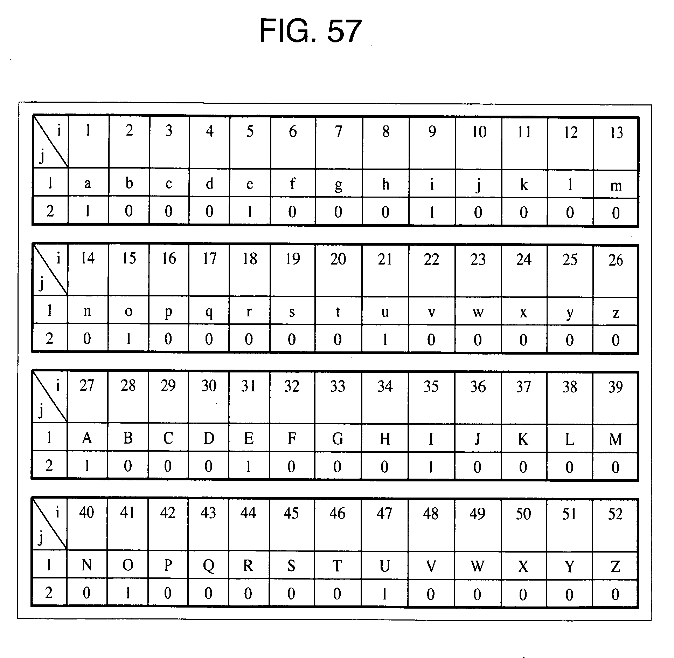

[Fig. 57] Illustrates an example of the arrangement B(i, j) in the phonetic characters.

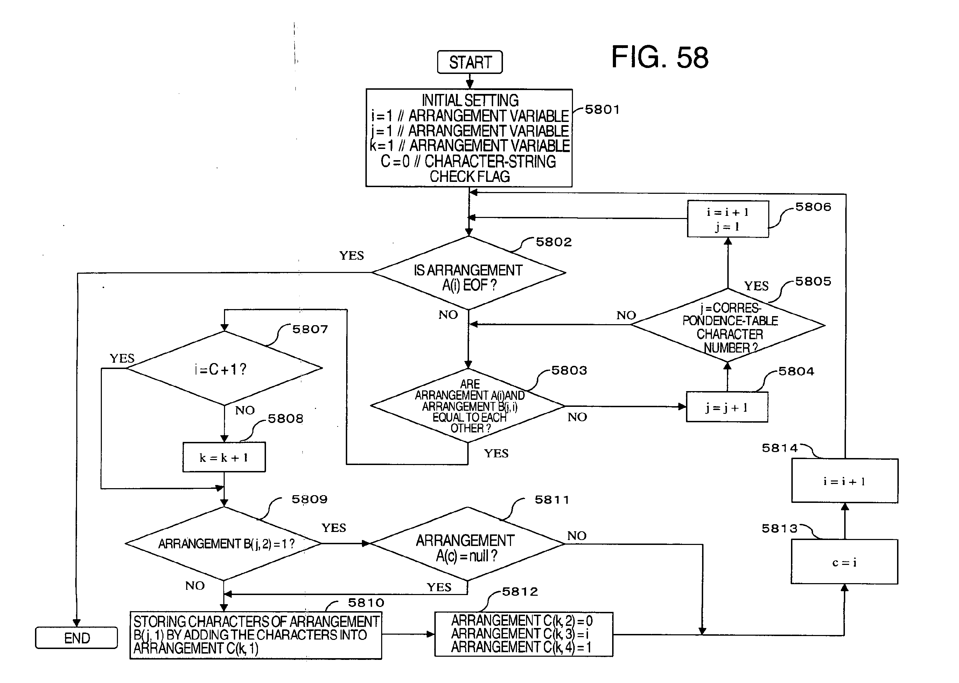

[Fig. 58] Illustrates an explanation of the Index display character-string selection algorithm in the phonetic characters.

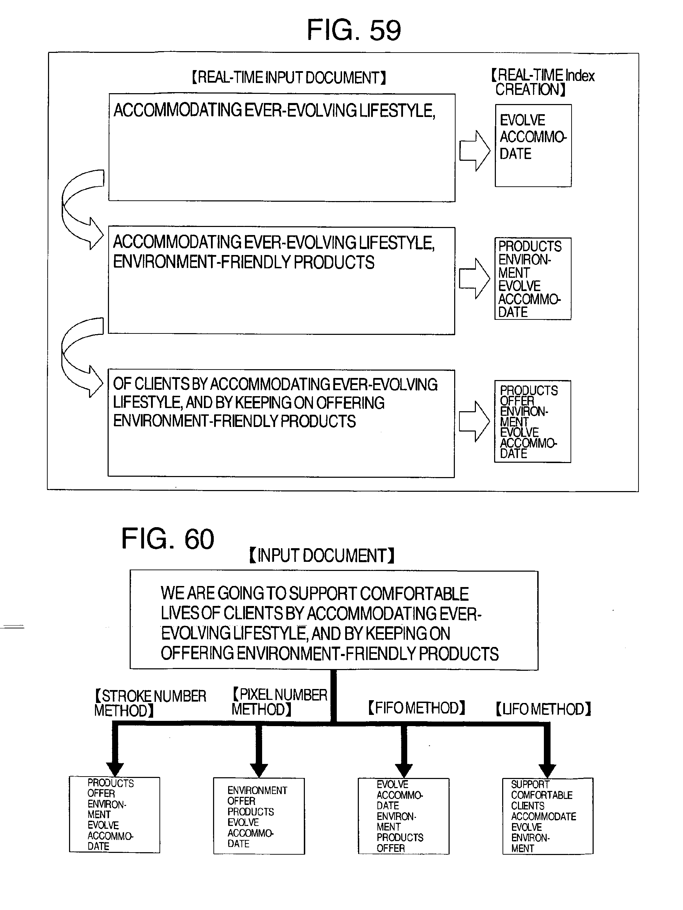

[Fig. 59] Illustrates an example of the Index creation by a real-time input.
[Fig. 60] Illustrates an example of the Index creation mode switching.

## Claims

1. A character display method for displaying a document on an information terminal, said document including a plurality of character types, said character display method comprising the steps of:
storing a predetermined character type into a storage device in advance, said predetermined character type being specified from among said plurality of character types,
extracting characters of said predetermined character type out of said document,
identifying characters which, of said extracted characters, indicate feature of said document, and
displaying said identified characters in a predetermined arrangement.

2. The character display method according to Claim 1, wherein said predetermined character type includes a character, said character belonging to the same character type and being specified in advance.

3. The character display method according to Claim 1, wherein said predetermined character type includes an ideographic character.

4. The character display method according to Claim 1, wherein said predetermined character type includes characters which, of Alphabet, indicate consonants.
